(19) Europäisches Patentamt
European Patent Office
Office européen des brevets

(11) **EP 4 519 130 B1**

(12) **EUROPÄISCHE PATENTSCHRIFT**

(45) Veröffentlichungstag und Bekanntmachung des Hinweises auf die Patenterteilung:
**15.07.2026 Patentblatt 2026/29**

(21) Anmeldenummer: **23708780.4**

(22) Anmeldetag: **02.03.2023**

(51) Internationale Patentklassifikation (IPC):
**B60T 8/172** *(2006.01)* **B60W 40/068** *(2012.01)*

(52) Gemeinsame Patentklassifikation (CPC):
**B60T 8/172; B60W 40/068; B60T 2210/12**

(86) Internationale Anmeldenummer:
**PCT/EP2023/055288**

(87) Internationale Veröffentlichungsnummer:
**WO 2023/213462 (09.11.2023 Gazette 2023/45)**

(54) **VERFAHREN ZUM ERMITTELN EINES MAXIMALEN REIBUNGSKOEFFIZIENTEN EINES RADES EINES FAHRZEUGS AUF EINER FAHRBAHN**

METHOD FOR DETERMINING A MAXIMUM COEFFICIENT OF FRICTION OF A WHEEL OF A VEHICLE ON A ROAD

PROCÉDÉ DE DÉTERMINATION D'UN COEFFICIENT DE FROTTEMENT MAXIMAL D'UNE ROUE D'UN VÉHICULE SUR UNE ROUTE

(84) Benannte Vertragsstaaten:
**AL AT BE BG CH CY CZ DE DK EE ES FI FR GB GR HR HU IE IS IT LI LT LU LV MC ME MK MT NL NO PL PT RO RS SE SI SK SM TR**

(30) Priorität: **05.05.2022 DE 102022111202**

(43) Veröffentlichungstag der Anmeldung:
**12.03.2025 Patentblatt 2025/11**

(73) Patentinhaber: **ZF CV Systems Global GmbH 3006 Bern (CH)**

(72) Erfinder: **PADMANABHAN, Adarsh Venkata 30982 Pattensen (DE)**

(74) Vertreter: **Rabe, Dirk-Heinrich ZF CV Systems Hannover GmbH Am Lindener Hafen 21 30453 Hannover (DE)**

(56) Entgegenhaltungen:
WO-A1-03/074337 CN-B- 110 095 801
DE-A1- 10 156 823 DE-A1- 102007 039 176
DE-A1- 19 963 135 DE-A1- 4 435 448

**EP 4 519 130 B1**

## Beschreibung

Die Erfindung betrifft ein Verfahren zum Ermitteln eines maximalen Reibungskoeffizienten eines Rades eines Fahrzeugs auf einer Fahrbahn, weiterhin ein Steuergerät sowie ein Fahrzeug.

Der Reibungskoeffizient beziehungsweise Haftbeiwert oder Reibwert zwischen einem Fahrzeugrad und der Fahrbahn wird in verschiedenen Fahrzeug-Regelsystemen, insbesondere Fahrzeug-Regelsystemen und Fahrerassistenzsystemen berücksichtigt.

Hierbei sind grundsätzlich der aktuelle bzw. tatsächliche Reibungskoeffizient der Fahrsituation und weiterhin der maximale Reibungskoeffizient relevant. Der genaue Wert des Reibungskoeffizienten hängt zum einen von den Materialien der beiden Oberflächen, das heißt dem Straßenbelag und der Oberfläche des Fahrzeugreifens, sowie auch aktuellen, sich ändernden Größen, wie zum Beispiel Temperatur, Feuchtegrad, ggf. die Rauigkeit der Oberflächen und Beeinflussung durch zusätzliche Partikel wie zum Beispiel Sand, Split oder Verschmutzungen ab. Eine genaue Kenntnis des Reibungskoeffizienten ist somit wichtig, aber oftmals schwer abzuschätzen.

Die DE 10 2016 211 728 A1 beschreibt ein Verfahren zur Reibwertermittlung, bei dem ein erstes Rad eines Fahrzeugs derart abgebremst wird, dass zwischen dem ersten Rad und einer Fahrbahn ein Schlupf entsteht, der kleiner ist als ein Schlupf zwischen einem zweiten Rad und der Fahrbahn, wobei das Verhalten des ersten Rades während des Abbremsens ermittelt wird. Somit erfolgt eine Reibwertermittlung aus einem Vergleich des Schlupf-Verhalten mehrerer Räder des Fahrzeugs. Hierzu werden zunächst vergleichbare Reibungskoeffizienten an den Rädern vorausgesetzt, wobei zur Ermittlung ein aktiver Bremsvorgang vorgesehen ist.

Die DE 10 2020 111 520 B3 beschreibt ein Verfahren zum Bestimmen des Reibwertes, bei dem eine Radlast an einem Fahrzeugrad verringert wird und die Spurwinkel von Rädern einer Achse gezielt eingestellt werden, sodass zunächst ein vorläufiger Reibwert ermittelt wird, wobei nachfolgend eine Radlängskraft und eine im Normalfall anliegende Radlast zur weiteren Berechnung herangezogen werden. Auch für eine derartige Ermittlung werden somit aktive Verstellungen am Fahrzeug beziehungsweise an den Rädern vorgenommen und Räder einer Achse miteinander verglichen.

Das Dokument DE19963135A1 richtet sich auf ein Gerät zum Schätzen der Spitze eines Reibungskoeffizienten bei einer Reibungskoeffizienten-Schlupfraten-Eigenschaft, wobei eine Radbeschleunigung von jedem Rad eines Fahrzeugs erfasst wird und eine Fahrzeugbeschleunigung des Fahrzeugs erfasst wird. Eine Spitzenschätzvorrichtung ist vorgesehen zum Schätzen der Spitze des Reibungskoeffizienten und geeignet zum Ermitteln, dass der Reibungskoeffizient die Spitze hat, wenn die Radbeschleunigung niedriger als die Fahrzeugbeschleunigung ist um mehr als eine vorgebene Differenz. Ein Antiblockierregelsystem für ein Kraftfahrzeug kann gebildet werden, um das Reibungskoeffizientenspitzenschätzgerät zu erfassen und eine Referenzgeschwindigkeiteinrichtevorrichtung zum Einrichten einer Referenzgeschwindigkeit zum Initiieren einer Druckabnahmebetriebsart auf der Grundlage einer Radgeschwindigkeit und einer Fahrzeuggeschwindigkeit, die erfasst wird, wenn die Spitze erfasst wurde. Eine Druckregelvorrichtung ist angeordnet zwischen einem Radbremszylinder und einem Druckgenerator, um geregelt zu werden ansprechend auf zumindest das Vergleichsergebnis zwischen der Radgeschwindigkeit und der Referenzgeschwindigkeit.

Derartige Verfahren ermöglichen im Allgemeinen die Ermittlung des tatsächlichen Reibungskoeffizienten (actual wheel friction coefficient) der jeweils vorliegenden Fahrsituation. Weiterhin ist jedoch die Ermittlung des maximalen Reibungskoeffizienten beziehungsweise maximalen Reibbeiwertes (peak friction coefficient) hilfreich, insbesondere für Fahrstabilitätsregelungen und Bremssysteme. Der Erfindung liegt die Aufgabe zugrunde, ein Verfahren zur Ermittlung eines maximalen Reibungskoeffizienten, ein Steuergerät zur Durchführung des Verfahrens und ein Fahrzeug zu schaffen, die eine genaue Ermittlung des maximalen Reibungskoeffizienten mit relativ geringem Aufwand ermöglichen.

Diese Aufgabe wird durch ein Verfahren nach Anspruch 1 gebildet, weiterhin sind ein Fahrzeug-Regelverfahren unter Einsatz des Verfahrens, ein Steuergerät zur Durchführung des Verfahrens und ein Fahrzeug mit dem Steuergerät vorgesehen. Somit ist vorgesehen, den maximalen Reibungskoeffizienten zwischen einem Rad und der Fahrbahn aus einem Vergleich einer Referenz-Radbeschleunigung, die auf Grundlage des Fahrzeugverhaltens ermittelt wird, und einer reellen Radbeschleunigung, die aus dem Schlupf-Verhalten des Rades ermittelt wird, zu berechnen.

Hierdurch werden bereits einige Vorteile erreicht:
Die Ermittlung des maximalen Reibungskoeffizienten kann mit einer grundsätzlich im Fahrzeug vorhandenen Sensorik erfolgen. Hierbei können vorteilhafterweise bereits für andere Steuerungssysteme und Regelsysteme vorliegende Informationen, zum Beispiel Informationen und Daten des Beschleunigungsverhaltens und GierVerhaltens des Fahrzeugs in der Ebene, herangezogen werden, die entweder für andere Regelungen bereits vorliegen oder mit geringem Aufwand ermittelt werden können. So ist die Ermittlung der reellen Radbeschleunigung des Rades unter Heranziehung insbesondere eines Radschlupfes im Allgemeinen mit geringem Aufwand möglich, da das Schlupf-Verhalten grundsätzlich bereits für unterschiedliche Steuerungs- und Regelsysteme im Fahrzeug, insbesondere ABS, ermittelt wird.

Ein weiterer Vorteil der Erfindung liegt darin, dass eine Ermittlung grundsätzlich ohne aktive Beeinflussung des Fahrzeugs, insbesondere auch ohne aktive Bremsvorgänge oder Beschleunigungsvorgänge, möglich ist. Somit sind zum Beispiel keine Probe-Bremsungen und andere Vorgänge erforderlich, die zum einen die Stabilität des Fahrzeugs und das Fahrverhalten beeinträchtigen können und weiterhin zeitaufwändiger sind und nicht fortlaufend durchgeführt werden können. Ein weiterer Vorteil der Erfindung liegt in der Reproduzierbarkeit der Ermittlungen und Messungen. So sind Schätzungen eines Reibungskoeffizienten durch aktive Verstellungen im Allgemeinen nicht so reproduzierbar wie eine Ermittlung durch bereits vorliegende Sensordaten. Weiterhin ist eine individuelle Ermittlung der Reibungskoeffizienten für jedes Fahrzeugrad mit herkömmlichen Verfahren im Allgemeinen aufwändiger, insbesondere bei aktiven Verstellungen.

Ein weiterer Vorteil der Erfindung liegt darin, dass die Ermittlung des maximalen Reibungskoeffizienten grundsätzlich unabhängig von Messungen oder Schätzungen der Oberflächenbeschaffenheit erfolgen kann.

Der Erfindung liegt die Erkenntnis zugrunde, dass der maximale Reibungs-Koeffizient unterschiedlich stark in ein reelles Radbeschleunigungsverhalten des Fahrzeugrades, insbesondere ein Schlupf-Verhaltens, und ein Referenz-Radbeschleunigungsverhalten des Rades in dem Fahrzeug eingeht. So wird erfindungsgemäß eine Referenz-Beschleunigung des Rades als von dem maximalen Reibungskoeffizienten abhängiger Wert und eine reelle Radbeschleunigung als von dem maximalen Reibungskoeffizienten unabhängiger bzw. normierter Wert ermittelt, so dass aus einem Vergleich dieser Größen, und zwar aus einem Quotienten, der maximale Reibungs-Koeffizient, insbesondere jedes einzelnen Rades, ermittelt werden kann.

Gemäß einer bevorzugten Weiterbildung wird die Referenz-Radbeschleunigung ermittelt aus gemessenen Beschleunigungs-Werten und einem gemessenen Gierverhalten des Fahrzeugs, insbesondere einer Gierrate. Die Messungen können insbesondere mittels Trägheits-Sensoren erfolgen. Hierbei wird vorteilhafterweise genutzt, dass entsprechende Sensoren, insbesondere Trägheitssensoren, bereits für andere Regelsysteme vorgesehen sein können.

Bei der Berechnung gehen vorteilhafterweise die Abstände des Rades zu den Sensoren und/oder zu einem Schwerpunkt des Fahrzeugs in die Ermittlung ein. Somit kann eine schnelle aktuelle Ermittlung unter Heranziehung von festen geometrischen Abständen, die sich zeitlich nicht ändern, erfolgen. Hier kann insbesondere ein einheitlicher Sensorabstand einer Trägheitssensor-Einheit (IMU, inertial measurement unit), eingehen. Gemäß einer hierzu alternativen Ausbildung erfolgt eine Abschätzung des maximalen Reibungskoeffizienten auf Grund eines einfachen Variations-Modells mittels eines zwei Punkte-Differenz-Ansatzes.

Somit kann die Beschleunigung des Fahrzeugs in der Ebene, das heißt in Längsrichtung und Querrichtung (Lateralrichtung) sowie das Gierverhalten durch eine Sensoreinheit gemessen werden, und aus dem Abstand des jeweiligen Fahrzeugrades von der Sensoreinheit das jeweilige Beschleunigungsverhalten des Fahrzeugrades in der Ebene, dass heißt die Längsbeschleunigung und Querbeschleunigung des Rades in einem Koordinatensystem des Rades ermittelt werden.

Bei der Ermittlung der Referenz-Radbeschleunigung wird vorzugsweise eine VertikalKomponente der gemessenen Werte der Beschleunigungen und des Gierverhaltens kompensiert bzw. herausgerechnet, um die Dynamik in der Ebene zu erhalten. Insbesondere erfolgt eine Ermittlung gravitations-kompensierter Beschleunigungen in Längsrichtung und Querrichtung, da das Bewegungsverhalten in der Fahrbahn-Ebene herangezogen werden soll. Somit soll insbesondere eine Fahrsituation mit vertikaler Komponente, z.B. an einem Hang oder Gefälle, auf einer Fahrbahn mit Querneigung, weiterhin vorzugsweise auch aufgrund einer Wank-Bewegung oder Rollbewegung des Fahrzeugs um seine Längsachse oder einer Nick-Bewegung um seine Querachse, berücksichtigt werden.

Alternativ oder ergänzend zu Messungen ist auch eine Ermittlung der Beschleunigungen und des Gierverhaltens aus Daten über die Position des Fahrzeugs in einem externen Positionsbestimmungssystems, zum Beispiel einem GPS möglich, indem die Trajektorie des Fahrzeugs in dem externen Positionsbestimmungssystem herangezogen wird.

Die reale Radbeschleunigung wird vorteilhafterweise aus einem Längs-Schlupf und einem Quer-Schlupf des Rades berechnet, wobei diese Schlupfwerte wiederum aus weiteren Fahrzeuggrößen ermittelt werden. So kann der Quer-Schlupf insbesondere ermittelt werden aus der Raddrehzahl, einem Lenkwinkel des Rades und der gemessenen Gierrate, insbesondere unter Heranziehung geometrischer Werte des Fahrzeugs, z.B. der Spurbreite der betreffenden Achse, um die Position des Rades zu ermitteln. Somit ist eine einfache Ermittlung des Quer-Schlupfs mit vorhandenen oder leicht zu ermittelnden Werten möglich.

Der Längsschlupf des Rades wird im Allgemeinen bereits für Regelsysteme wie ABS und/oder ASR verwendet und ist daher oftmals bekannt; er kann insbesondere ermittelt werden aus der Raddrehzahl, einem Lenkwinkel des Rades, der Gierrate, insbesondere unter Heranziehung weiterer Werte wie der geometrischen Ausbildung des Fahrzeugs, insbesondere der Spurbreite, und Fahrzeugdaten des Fahrzeugs wie zum Beispiel die Fahrtrichtung und die Fahrzeuggeschwindigkeit.

Die unterschiedlichen Koordinatensysteme des Fahrzeugs und des Fahrzeugrades können durch eine Transformation der Fahrzeug-Koordinaten beziehungsweise der gemessenen Größen auf eines der beiden Koordinatensysteme ineinander umgerechnet werden. Diese Umrechnung kann vorteilhafterweise unter Verwendung jeweils konstanter Werte, insbesondere geometrischer Werte des Fahrzeugs und/oder des Rades erfolgen, so dass eine schnelle und einheitliche Umrechnung möglich ist, in die jeweils gleiche Größen eingehen, so dass sich keine aktuellen Messfehler aufaddieren.

Das erfindungsgemäße Verfahren kann insbesondere einem Nutzfahrzeug, insbesondere mit zwei oder mehr nicht-gelifteten Achsen, eingesetzt werden. Es ist grundsätzlich nicht auf eine bestimmte Anzahl von Achsen beschränkt.

Somit wird vorteilhafter Weise eine aktuelle und schnelle Ermittlung des maximalen Reibungskoeffizienten für einzelne Räder, insbesondere für die Räder sämtlicher nicht-gelifteten Achsen des Fahrzeugs ermöglicht. Durch den so ermittelten maximalen Reibungskoeffizienten können somit Steuerungs- und Regelsysteme sowie Steuerungs- und Regelverfahren des Fahrzeuges, insbesondere Bremsregelsysteme, schnell und gezielt durchgeführt werden.

In die Steuerungs- und Regelsysteme kann vorzugsweise auch der tatsächliche bzw. aktuelle Reibungs-Koeffizient eingehen, der mit einem herkömmlichen Verfahren, z.B. einem der eingangs beschriebenen Verfahrens, ermittelt wird.

Gemäß vorteilhaften Ausbildungen sind ein oder mehrere der folgenden Zwischenschritte vorgesehen:

Umrechnungen zwischen einem Straßen-Koordinationssystem, FahrzeugKoordinationssystem und Rad-Koordinationssystem,
eine Transformation der Fahrzeuggeschwindigkeiten von einem Straßen-Koordinationssystem in ein Rad-Koordinatensystem,
eine Umrechnung der Rad-Längsgeschwindigkeit einer lenkbaren Vorderachse unter Verwendung der transformierten Rad-Koordinaten,
eine Ermittlung des Radschlupfes der lenkbaren Vorderachse,
eine Ermittlung des Längs-Schlupfs und des Quer-Schlupfs der Vorderachse,
eine Berechnung der lateralen Radgeschwindigkeiten (Quer-Geschwindigkeiten) der Räder der lenkbaren Vorderachse, eine Berechnung der Fahrzeug-Quergeschwindigkeit aus der ermittelten Quergeschwindigkeit der Vorderachse,
eine Ermittlung der Koordinaten der Räder beziehungsweise Achsen in einem Fahrzeug-Koordinatensystemen, insbesondere bezüglich des Schwerpunktes,
eine Berechnung der transformierten Rad-Referenzgeschwindigkeiten der weiteren Achsen, eine Berechnung des Längs-Schlupfs und Quer-Schlupfs der Radachsen.

Gemäß einer bevorzugten Ausführungsform ist vorgesehen, dass bei einem geringem Lenkwinkel, d.h. insbesondere unterhalb eines Lenkwinkel-Grenzwertes, insbesondere bei nicht gelenkten Achsen oder bei einer gelenkten Achse bei einer Geradeausfahrt oder nahe an einer Geradeausfahrt, ein Längsschlupf und ein Querschlupf eines Rades berechnet werden über eine Projektions-Differenz der Projektionen des Längsschlupfes und des Querschlupfes auf eine Längsrichtung des Rades. Hierdurch ergibt sich eine einfache und sichere Ermittlung beider Schlupfwerte, ohne hier Größen einzubeziehen, die gegebenenfalls nicht vorliegen.

Figurenbeschreibung

Die Erfindung wird im Folgenden anhand der beiliegenden Zeichnungen an einigen Ausführungsformen erläutert. Es zeigen:

Figur 1    Ein Fahrzeug-Modell eines Fahrzeugs mit fünf Achsen auf einer Fahrbahn;
Figur 2    eine Darstellung des Schwerpunkt-Versatzes der Sensoreinheit;
Figur 3    eine Darstellung der Kräfte und Beschleunigung an einem Fahrzeugrad;
Figur 4    eine Darstellung der Bezugssysteme an einem Fahrzeugrad;
Figur 5    ein Flussdiagramm eines erfindungsgemäßen Verfahrens;
Figur 6    eine Darstellung der Ermittlung einer Projektions-Differenz

Ein Nutzfahrzeug 1 mit fünf Achsen A1, A2, A3, A4 und A5 fährt auf einer Fahrbahn 2 mit einer Fahrbahn-Oberfläche 3. Die einzelnen Räder 4 des Nutzfahrzeugs 1 weisen eine Reifenoberfläche 6 und eine Radachse 7 auf, wobei ihre Reifenoberfläche 6 in einer Reifenaufstandsfläche 8 auf der Fahrbahn-Oberfläche 3 aufliegt. Zwischen der im Allgemeinen aus Gummi-Material ausgebildeten Reifenoberfläche 6 und der Fahrbahn-Oberfläche 3 wird somit eine Haftreibung oder Roll-Reibung ausgebildet, die durch einen aktuellen bzw. tatsächlichen Reibungs-Koeffizient bzw. Haft-Reibwert mue und einen maximalen Reibungs-Koeffizienten (maximaler Haft-Reibwert) mue_0 beschrieben werden kann. Der tatsächliche Reibungs-Koeffizient mue und der maximale Reibungs-Koeffizient mue_0 hängen von verschiedenen aktuellen Bedingungen und Eigenschaften der Reifenoberfläche 6 und der Fahrbahn-Oberfläche 3 ab, die vorab nicht bekannt sind, insbesondere von den Materialien bzw. Material-Zusammensetzungen, Temperaturen, Rauigkeiten, und Feuchte bzw. Feuchtigkeits-Grad und auf der Fahrbahn-Oberfläche 3 liegenden Partikeln wie Sand oder Split. Somit wird ein Reibungs-Koeffizient mue ausgebildet, dessen maximaler Wert mue_0 für das Verhalten des Nutzfahrzeugs 1 auf der Fahrbahn 2 relevant ist

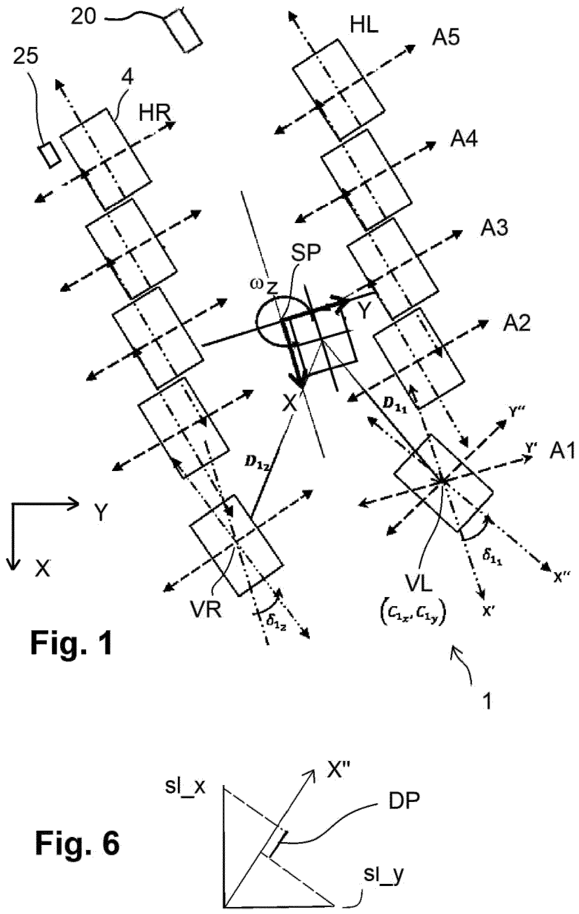

In den Figuren 1 bis 4 sind unterschiedliche Koordinatensysteme eingezeichnet. Hierbei ist in üblicher Weise ein Straßen- Koordinatensystem mit den Koordinaten XYZ, das somit von der Fahrbahn 2 aus bezogen ist, wobei die vertikale Richtung Z bei diesen Draufsichten und Berechnungen zunächst nicht relevant ist und nachfolgend Sensorwerte in vertikaler Z-Richtung entsprechend kompensiert bzw. korrigiert werden. Weiterhin sind ein Fahrzeug- Koordinatensystem mit den Koordinaten X'Y'Z', dass auch Achsen-Koordinatensystem genannt wird, und ein Rad- Koordinatensystem mit den Koordinaten X"Y"Z" vorgesehen.

Die einzelnen Räder 4 des Nutzfahrzeugs 1 werden in üblicher Weise durch Indizes i für die Achse und j für die Seite des Fahrzeugs 1 bezeichnet, mit j=1 für die linke Seite und j=2 für die rechte Seite. Somit werden auch die jeweiligen physikalischen Größen der Räder 4 mit diesen Indizes i und j bezeichnet. In Figur 1 ist somit das Nutzfahrzeug 1 in Aufsicht dargestellt, mit einer Vorderachse A1 und weiteren Achsen A2 bis A5, so dass die Hinterachse als A5 bezeichnet ist. Die gelenkte Vorderachse A1 wird somit durch das linke Vorderrad VL, das die Indexierung i=1, j=1 trägt und ein rechtes Vorderrad VR gebildet, das die Indexierung i=1, j=2 trägt. Entsprechend wird das linke Hinterrad HL durch die Indexierung i=5 (5. Achse) und j=1 beschrieben, und das rechte Hinterrad HR mit der Indexierung i=5, j=2.

Der Lenkwinkel delta wird für ein Rad 4-ij als delta_ij bezeichnet.

In der Beschreibung der Ausführungsformen sind zum Teil Indizierungen weggelassen worden, die sich auf sämtliche Werte der Indizes beziehen; so wird z.B. sl_x oder auch slx allgemein verwendet für slij_x, d.h. insbesondere für alle Werte i und j oder alle relevanten Werte von i und j: entsprechend wird sl_y oder sly allgemein verwendet für slij_y, d.h. insbesondere für alle Werte i und j oder alle relevanten Werte von i und j.

Weiterhin sind mathematische Bezugszeichen und Variablen, die im Allgemeinen durch griechische Buchstaben wie $\mu, \delta, \alpha, \omega, \sigma$ bezeichnet werden, in üblicher Weise auch durch ihre Transskriptionen in lateinischen Buchstaben wiedergegeben, d.h. z.B. als mue, delta, alpha, omega, sigma.

In dem Nutzfahrzeug 1 ist die Vorderachse A1 gelenkt, das heißt die Vorderräder VL und VR sind gegenüber dem Fahrzeugkoordinationssystem X' Y' verstellbar. Die weiteren vier Achsen A2 bis A4 sind nicht liftbar, das heißt sie bleiben in Ihrer Reifenaufstandsfläche 8 mit ihrer Radlast auf der Fahrbahn 2.

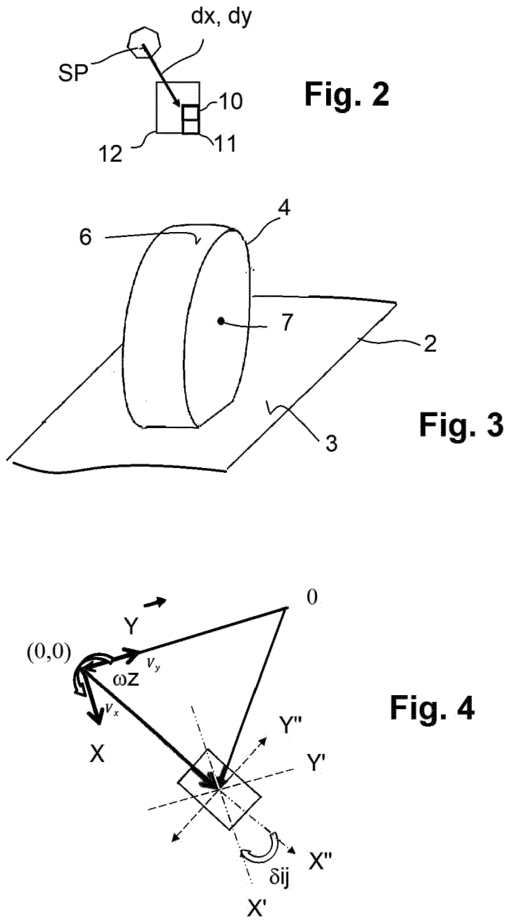

Die physikalischen Größen werden weiterhin auf die jeweiligen Koordinatensysteme bezogen, sodass sie die Indizierung der Koordinatensysteme XYZ, X'Y'Z' und X"Y"Z" tragen. Die Koordinatensysteme XYZ, X'Y'Z' und X"Y"Z" können entsprechend ineinander umgerechnet werden, wie aus Figur 4 und den nachfolgenden Gleichungen ersichtlich ist. Eine Transformation der Koordinatensysteme erfolgt im Allgemeinen als Lineartransformation über Matrizen, bei Betrachtungen in der Ebene somit über 2X2 Matrizen. Hierbei sind die Abstände der Nullpunkte der Koordinatensysteme und ihre Ausrichtung zueinander zu berücksichtigen

Das Fahrzeug 1 weist einen Schwerpunkt SP und eine Trägheits-Sensoreinrichtung (IMU- inertial measurement unit) 10 mit einem Beschleunigungssensor 11 zur Messung einer Längsbeschleunigungen a'x in Längsrichtung X' und einer Querbeschleunigung a'y in Querrichtung Y' auf, weiterhin einen Gierratensensor 12 zur Messung einer Gierrate omega um die die in vertikaler Z'-Richtung verlaufende Hochachse bzw. Gierachse, d.h. in der X'X'-Ebene.

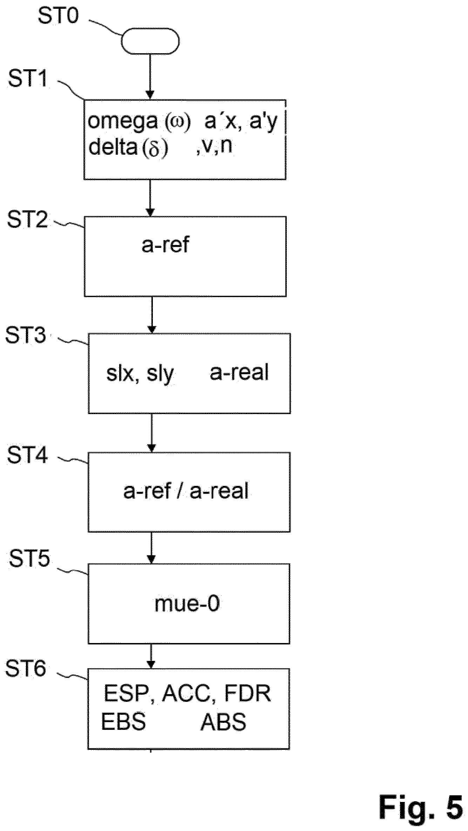

Gemäß dem Verfahren der Fig. 5 erfolgt nach dem Start in Schritt ST0 nachfolgend in Schritt ST1 eine Aufnahme von Messwerten der Trägheits-Sensoreinrichtung 10 und weiterer Fahrzeuggrößen des Fahrzeugs 1, insbesondere der Fahrzeug-Längsbeschleunigung a'x und der Fahrzeug-Querbeschleunigung a'y , der Fahrgeschwindigkeit v und der Raddrehzahlen n. Weiterhin werden ein Lenkwinkel delta der einzelnen Räder, d.h. insbesondere der Vorderräder VL und VR, gemessen oder ermittelt.

Die Schritte ST2 bis ST5 werden nachfolgend für jedes Rad 4, d.h. die Räder 4-ij mit i= 1 bis 5 und j=1 und j=2 durchgeführt.

In Schritt ST2 erfolgt ein Ermitteln einer Referenz-Radbeschleunigung a-ref des Ra des 4 im Fahrzeug-Koordinatensystem X'Y' mittels unter anderem der Längsbeschleunigung a'x in Längsrichtung X' und der Querbeschleunigung a'y in Querrichtung Y' sowie der Gierrate omega, Hierbei ist der Lenkwinkel delta des Rades 4 bzw. der Rad-Längsachse X" gegenüber der Fahrtrichtung X' sowie ein Abstand SD des Rades 4 von dem Nullpunkt des Koordinatensystems X'Y', d.h. im Allgemeinen der Position der Trägheits-Sensoreinheit 10 des Fahrzeugs 1, zu berücksichtigen.

In Schritt ST3 erfolgt eine Ermittlung der reellen Radbeschleunigung a-real des Rades 4 auf der Fahrbahn 2 auf Grundlage eines Längs-Schlupfs sl_x und eines Quer-Schlupfs sl_y. Die Schritte ST2 und ST3 können in beliebiger Reihenfolge oder parallel durchgeführt werden.

In Schritt ST4 erfolgt dann ein Vergleich der Referenz-Radbeschleunigung a-ref und der reellen Radbeschleunigung a-real, insbesondere durch eine Quotientenbildung, so dass in Schritt St5 der maximale Reibungskoeffizienten mue_0 ermittelt wird.

Nachfolgend wird für die Umrechnungen der Koordinatensysteme beispielhaft die Umrechnung der Radgeschwindigkeiten vij von dem Straßen-Koordinatensystem XY in das Rad-Koordinatensystem X"Y" beschrieben, mit den Komponenten Vx-Richtung in x-Richtung und Vy-Richtung in y-Richtung.

Es erfolgt eine Lineartransformation gemäß Gleichung GL1

$$\begin{bmatrix} V_{i_{j_x}} \\ V_{i_{j_y}} \end{bmatrix}_{X''Y''} = R\left(\delta_{i_j}\right) \begin{bmatrix} V_{x_B} \\ V_{y_B} \end{bmatrix}_{X'Y'} = \begin{bmatrix} \cos\delta_{i_j} & \sin\delta_{i_j} \\ -\sin\delta_{i_j} & \cos\delta_{i_j} \end{bmatrix} \begin{bmatrix} V_x\sigma - C_{i_y}\omega_z \\ V_y + C_{i_x}\omega_z \end{bmatrix}$$

Gleichung (GL1)

mit den Größen

- *Cix, Ciy* X, Y - Koordinaten des Rades j an der Achse i

  wobei *C2x = C1x - l12, C3x = C1x - l13* usw., wobei
  C1x die X- Komponente der lenkbaren Vorderachse A1 in Metern ist,
  C2x die X- Komponente der zweiten Achse A2 in Metern ist, usw,
  *l1i* als Achsen-Abstand zwischen Achse 1 und Achse i
  Vx, Vy die X- und Y- Komponente der Fahrzeuggeschwindigkeit V an der Position der Trägheitssensor-Einheit 10,
  Hierbei gibt $\delta ij$ den Lenkwinkel oder Steuerwinkel des Rades j an der Achse i in Radianten, in dem Rad-Koordinatensystem X"Y" an, und dient daher der Umrechnung von dem Rad-Koordinatensystem X"Y" auf das Fahrzeug-Koordinatensystem X'Y'

- *Vijx* und *Vijy* als x- Komponente und y- Komponente der Geschwindigkeiten des Rades 4-ij,
  das Rad 4-11 ist somit das Rad VL, das Rad 4-12 ist somit VR, 4-21 ist HL, 4-22 ist VR, in dem Rad-Koordinatensystem X"Y"
- *bi* Spurbreite der Ache I,
- dx dy als Sensor-Abstand zwischen dem Schwerpunkt SP und der Trägheitssensor-Einheit 10,
- R (delta_ij) als Rotationsmatrix um den Lenkwinkel delta_ij
- σ (sigma) stellt ein Signum bzw. einen Vorzeichenwert dar, mit sigma als +1, 0, -1 der Fahrtrichtung dar, d.h. Vorwärtsfahrt, Stillstand oder Rückwärtsfahrt.

Die Transformation mit dem Geschwindigkeitsvektor auf der rechten Seite der Gleichung, d.h.

$$\left\|\begin{bmatrix} V_x\sigma - C_{i_y}\omega_z \\ V_y + C_{i_x}\omega_z \end{bmatrix}\right\|$$

ist grundsätzlich nicht erforderlich; eine Ermittlung ist im Koordinatensystem X'Y' oder auch X" Y" möglich, da diese Berechnung der Gleichung GL1 zur Ermittlung der Referenz-Radbeschleunigung dient, die letztlich immer im Fahrzeug-Koordinatensystem X'Y' betrachtet wird.

Nachfolgend wird die Berechnung der Rad-Längsgeschwindigkeit der lenkbaren Vorderachse VL durch Heranziehung der transformierten Radgeschwindigkeiten beschrieben:
Die Ermittlung des Radschlupfes sl für die nicht-liftbaren Räder 4_ij erfolgt vorzugsweise mit der Gleichung GL-sl-v

$$\begin{bmatrix} \text{sl-ijx} \\ \text{sl-ijy} \end{bmatrix}_{X''Y''} = \begin{bmatrix} \dfrac{V_{i_j}\sigma - V_{i_{j_x}}}{\max\left(\left|V_{i_j}\right|, \left|V_{i_{j_x}}\right|\right)} \\ -\left(\dfrac{V_{i_{j_y}}}{\max\left(\left|V_{i_j}\right|, \left|V_{i_{j_x}}\right|\right)}\right) \end{bmatrix}$$

(GL-sl-v)

wobei

- sl-ijx der Radschlupf in Richtung der Drehung des Rades 4-ij ist,

- sl-ijy der Radschlupf senkrecht zu der Richtung der Drehung des Rades 4-ij ist,
- Vij der Wert der Radgeschwindigkeit des Rades j an der Achse i ist, in m/s ausgedrückt, wobei dieser Wert vorzugsweise aus dem Raddrehzahlsensor und/oder der Raddrehzahl n gewonnen wird,
- sigma die Fahrtrichtung des Fahrzeugs 1 angibt,

d.h. sigma=1 für die Vorwährtsfahrt, sigma=0 für Stillstand und sigma=-1 für Rückwärtsfahrt.

Die Berechnung der kombinierten Radschlupfe der lenkbaren Vorderachse VL erfolgt dann vorzugsweise wie folgt:

Die erste Komponente bzw. das erste Vektorelement der Gl-sl-v wird herangezogen als

$$\text{sl-ijx} = \frac{V_{i_j}\sigma - V_{i_{jx}}}{\max\left(\left|V_{i_j}\right|, \left|V_{i_{jx}}\right|\right)}$$

$$\text{(GL-sl-v-x)}$$

unter Einsatz von GL-vijx:

$$V1jx = (Vx\sigma - C1y\omega z)\sec\delta 1j + V1jy\,\tan\delta 1j \qquad \text{(GL-vijx)}$$

ergibt sich GL- sl-v-delta

$$sl1jx = (\; V1j\sigma - ((Vx\sigma - C1y\omega z)\sec\delta 1j + V1jy\,\tan\delta 1j\;)\; /$$

$$\max(|V1j|, |(Vx\sigma - C1y\omega z)\sec\delta 1j + V1jy\,\tan\delta 1j|)$$

$$\text{(GL- sl-v-delta)}$$

und hieraus

$$sl_{1_{jx}} = \frac{V_{1_j}\sigma - \left(\left(V_x\sigma - C_{1_y}\omega_z\right)\sec\delta_{1_j}\right)}{\max\left(\left|V_{1_j}\right|, \left|\left(V_x\sigma - C_{1_y}\omega_z\right)\sec\delta_{1_j} + V_{1_{jy}}\tan\delta_{1_j}\right|\right)} - \frac{\left(V_{1_{jy}}\tan\delta_{1_j}\right)}{\max\left(\left|V_{1_j}\right|, \left|\left(V_x\sigma - C_{1_y}\omega_z\right)\sec\delta_{1_j} + V_{1_{jy}}\tan\delta_{1_j}\right|\right)}$$

$$sl_{1_{jx}} + \frac{\left(V_{1_{jy}}\tan\delta_{i_j}\right)}{\max\left(\left|V_{1_j}\right|, \left|\left(V_x\sigma - C_{1_y}\omega_z\right)\sec\delta_{1_j} + V_{1_{jy}}\tan\delta_{1_j}\right|\right)} = \frac{V_{1_j}\sigma - \left(\left(V_x\sigma - C_{1_y}\omega_z\right)\sec\delta_{1_j}\right)}{\max\left(\left|V_{1_j}\right|, \left|\left(V_x\sigma - C_{1_y}\omega_z\right)\sec\delta_{1_j} + V_{1_{jy}}\tan\delta_{1_j}\right|\right)}$$

Aus der zweiten Komponente bzw. dem zweiten Vektorelement der Gl-sl-v wird die folgende kombinierte Schlupfgleichung GL-sl-komb abgeleitet

$$sl_{1_{jx}} - sl_{1_{jy}}\tan\delta_{1_j} = \frac{V_{1_j}\sigma - \left(\left(V_x\sigma - C_{1_y}\omega_z\right)\sec\delta_{1_j}\right)}{\max\left(\left|V_{1_j}\right|, \left|\left(V_x\sigma - C_{1_y}\omega_z\right)\sec\delta_{1_j} + V_{1_{jy}}\tan\delta_{1_j}\right|\right)}$$

$$\text{(GL-sl-komb)}$$

Somit kann GL-sl-komb bei bekannten Werten der Fahrgeschwindigkeit vx und v1j, mit der bekannten Fahrtrichtung sigma, bei geringem Lenkwinkel delta, d.h. bei nicht gelenkten Achsen oder bei einer gelenkten Achse im Bereich der Geradeausfahrt, d.h. insbesondere bei delta < einem Grenz-Lenkwinkel delta_lim, vereinfacht werden, da dann der Lenkwinkel delta zu Null wird, sodass entsprechend auch der Tangens delta zu Null wird und der Term V1ij * tan delta1j als Summand wegfällt.

Somit kann gleichzeitig der Längsschlupf und Querschlupf berechnet werden.

Die linke Seite der Gleichung beschreibt somit, wie in Fig. 6 dargestellt, inhaltlich die Differenz DP der Projektionen des Längs-Schlupfes sl_x und Quer-Schlupfes sl_y auf die Längsrichtung des Rades, d.h. die X"-Achse bzw. die Richtung, in der Y"=0 ist, wie in Fig. 6 dargestellt.

Diese Darstellung gilt insbesondere für alle relevanten Werte von j und j, so dass hier die Indizierung insbesondere von slij_x und slij_y bzw. sl-ijx und sl-ijy verallgemeinert ist auf sl_x und sl_y.

Hierbei sind grundsätzlich zwei Vorgehensweisen möglich;

Wenn die X-Komponente Vx der Fahrzeuggeschwindigkeit V hinreichend valide ist, z.B. aus einem ABS-Referenzmodell, und diese somit herangezogen werden kann, kann, kann wie oben beschrieben die Berechnung direkt von der Gleichung GL-sl-komb weiter erfolgen.

Die Referenz-Radbeschleunigung a-ref und die reelle Radbeschleunigung a-real werden insbesondere als Vektor-Größen in der Ebene, das heißt mit x- und y-Koordinaten in ihrem jeweiligen Koordinatensystem, ermittelt und durch Transformation der Koordinatensysteme ineinander umgerechnet beziehungsweise aufeinander bezogen. Hierbei geht der maximale Reibungskoeffizient mue_0 als Proportionalitätsfaktor in die Beziehung dieser Größen ein, da die aus dem Rad-Modell ermittelten reelle Radbeschleunigungen a-real um diesen Wert normiert ermittelt werden.

Somit gilt für jedes Rad ij, dass mue_0_ij, das heißt der radspezifische maximale Reibungskoeffizient mue_0 des Rades ij sich unter Berücksichtigung der Koordinatensysteme aus folgender Gleichung GL-mue-a ergibt:

$$\text{mue\_0\_ij} \ * \ (\text{a-real})\text{ij} \ = \ (\text{a-ref})\text{ij} . \qquad\qquad \text{(GL-mue-a)}$$

Bei der Transformation der Koordinatensysteme ist grundsätzlich weiterhin der jeweilige geometrische Versatz dx, dy zwischen dem Schwerpunkt SP, der den NullPunkt des Fahrzeug-Koordinatensystems X'Y'Z' beschreibt, mit dem jeweiligen Rad-Koordinatensystem X"Y"Z" zu berücksichtigen. Dies ist in Fig. 2 dargestellt; vorzugsweise kann dieser Schwerpunkt-Versatz dx, dy jedoch in guter Näherung vernachlässigt werden.

Bei der Berechnung wird ein Rad-Modell nach der folgenden Gleichung GL-TMS (Tire Model Selection) angesetzt:

$$\mu(\mathsf{sl}) = (a + b + c)\mu_0 sl_0 \left( \frac{sl}{a(sl_0{}^2) + b(sl_0)|sl| + c(sl^2)} \right) \qquad \text{(GL-TMS)}$$

mit mue (sl) als tatsächlicher (aktueller) Reibungs-Koeffizient des Radschlupfs, d.h. Längs- Schlupfs und Quer-Schlupfs,

mue_0    als maximaler Reibungs-Koeffizient

sl    als Radschlupf

sl0    als Radschlupf bei dem Wert des maximalen Reibungs-Koeffizient mue_0

*a,b,c*    als radspezifische Konstanten.

Hierbei kann statt des Längs- Schlupfs und Quer-Schlupfs der geometrische Schlupf, d.h. die geometrische Summe sl-geom = sqrt ( (slx/slx0)² + (sly/sly0)² ) angesetzt werden,

Bei dem Vergleich nach Schritt ST4 wird gemäß einer ersten Ausführungsform folgenden Gleichung GL-PWFC (Peak Wheel Friction Coefficient) angesetzt, wobei gegebenenfalls auch noch ergänzend die Euler-Drehbeschleunigung berücksichtigt werden kann:

$$\mu(\mathsf{sl}) = (a + b + c)\mu_0 sl_0 \left( \frac{sl}{a(sl_0{}^2) + b(sl_0)|sl| + c(sl^2)} \right) \qquad \text{(GL-TMS)}$$

mit mue (sl) als tatsächlicher (aktueller) Reibungs-Koeffizient des Radschlupfs, d.h. Längs- Schlupfs und Quer-Schlupfs,

mue_0    als maximaler Reibungs-Koeffizient

sl  als Radschlupf

sl0  als Radschlupf bei dem Wert des maximalen Reibungs-Koeffizient mue_0

*a,b,c*  als radspezifische Konstanten.

Hierbei kann statt des Längs- Schlupfs und Quer-Schlupfs der geometrische Schlupf, d.h. die geometrische Summe sl-geom = sqrt ((slx/slx0)² + (sly/sly0)² ) angesetzt werden,

Bei dem Vergleich nach Schritt ST4 wird gemäß einer ersten Ausführungsform folgenden Gleichung GL-PWFC (Peak Wheel Friction Coefficient) angesetzt, wobei gegebenenfalls auch noch ergänzend die Euler-Drehbeschleunigung berücksichtigt werden kann:

$$\mu_{0_{i_j}} \begin{bmatrix} a_{i_{jx}} \\ a_{i_{jy}} \end{bmatrix}_{X'Y'} = \begin{bmatrix} a_{x_{gComp}} - \omega_z{}^2\left(C_{i_x} + d_x\right) \\ a_{y_{gComp}} - \omega_z{}^2\left(C_{i_y} + d_y\right) \end{bmatrix}$$

(GL-PWF)

mit:

- *axgComp, aygComp* als Gravitations-kompensierte Messwerte der Längsbeschleunigung ax und der Querbeschleunigung ay; somit wird aus den Messwerten ax und ay der Trägheitssensor-Einheit 10 die in vertikaler Richtung Z des Straßen-Koordinatensystems XYZ wirkende Gravitationskraft g kompensiert bzw. korrigiert, wobei insbesondere Werte in der Einheit $m/S^2$ angesetzt sind; somit werden Komponenten az vermieden,
- *aijx, aijy* als Rad-Längsbeschleunigung und Rad-Querbeschleunigung in der Reifenaufstandsfläche 8 im Rad-Koordinatensystem X"Y", für jedes sensierte Rad 4-ij,

  in m/s², d.h. der Vektor mue-0ij * (*aijx, aijy*) entspricht somit a-ref,
  und (*aijx, aijy*) entspricht der normierten realen Radbeschleunigung a-real,

- *Cix, Ciy* X, Y - Koordinaten des Rades j an der Achse i, d.h. hier Konstanten,
- *dx, dy* als Sensor-Abstand der Trägheitssensor-Einheit 10 von dem Schwerpunkt SP, der insbesondere im Koordinatensystem XYZ berechnet werden kann.

Falls hingegen die X-Komponente Vx der Fahrzeuggeschwindigkeit V nicht hinreichend valide ist, erfolgt hingegen eine Umrechnung mithilfe berechnete mue_0_ij für Zeitschritt k und Abtastzeit dT:

$$\begin{bmatrix} V_x\sigma - C_{i_y}\omega_z \\ V_y + C_{i_x}\omega_z \end{bmatrix}_k = \begin{bmatrix} V_x\sigma - C_{i_y}\omega_z \\ V_y + C_{i_x}\omega_z \end{bmatrix}_{k1} + \left( \mu_{0_{i_j}} \begin{bmatrix} a_{i_{jx}} \\ a_{i_{jy}} \end{bmatrix}_{X'Y'_{K1}} + \begin{bmatrix} 0 & \omega_z \\ -\omega_z & 0 \end{bmatrix} \begin{bmatrix} V_x\sigma - C_{i_y}\omega_z \\ V_y + C_{i_x}\omega_z \end{bmatrix}_{k1} \right) dT$$

wobei das berechnete,

$$\left\| \begin{bmatrix} V_x\sigma - C_{i_y}\omega_z \\ V_y + C_{i_x}\omega_z \end{bmatrix} \right\|$$

ermöglicht wiederum eine Umrechnung der Referenz-Radgeschwindigkeit Vij in das Rad-Koordinatensystem X"Y" beschriebenen Koordinatensysteme gemäß Gleichung GL_1, und der Radschlupf-Gleichung gemäß Gleichung GL-sl-v.

Alternativ hierzu wird gemäß einer zweiten Ausführungsform, insbesondere wenn der Sensorabstand der Sensoreinheit 10 vom Schwerpunkt SP vernachlässigt werden kann, in dem Vergleich nach Schritt ST4 ein Zwei-Punkte finiter Differenz-Ansatz gewählt, mit Gleichung GL-F

$$\mu_{0_{i_j}} \Delta \begin{bmatrix} a_{i_{j_x}} \\ a_{i_{j_y}} \end{bmatrix}_{X'Y'} = \Delta \begin{bmatrix} a_{x_{gComp}} - \omega_z{}^2\left(C_{i_x} + d_x\right) \\ a_{y_{gComp}} - \omega_z{}^2\left(C_{i_y} + d_y\right) \end{bmatrix}$$

(GL-F)

wobei

mue_0-ij    der maximale Reibungs-Koeffizient des Rades 4-ij ist, und

Delta, $\Delta$    der finite Differenz-Operator ist, d.h. ein mathematischer Operator.

Bei dieser Gleichung sind die maximalen Reibungs-Koeffizient mue_0 unabhängig von den Sensor-Abständen, da ihr Einfluss als kleiner konstanter Offset eingeht und daher in guter Näherung vernachlässigt werden kann.

Nach Schritt ST5 können die ermittelten maximalen Reibungs-Koeffizienten mue_0-ij der Räder 4-ij gemäß Schritt ST6 in einem Fahrzeug-Regelsystem eingesetzt werden, z.B. Antiblockier-Regelsystem ABS, Antriebsschlupf-Regelsystem, Elektronisches Bremssystem EBS, Fahrdynamik-Regelsystem, Elektronisches Stabilitätssystem ESP, Fahrerassistenzsystem, Fahrer-Komfortsystem, Abstandshaltesystem, Automatic-Cruise-Control. ACC.

In dem Fahrzeug 1 ist ein Steuergerät 20 für eines dieser Fahrzeug-Regelsysteme vorgesehen, dass somit die Signale aufnimmt, Berechnungen durchführt und z.B. Bremsen und/oder einen Antrieb des Fahrzeugs 1 ansteuert.

Bezugszeichen (Teil der Beschreibung)

1    Fahrzeug, insbesondere Nutzfahrzeug

2    Fahrbahn

3    Fahrbahn-Oberfläche

4    Rad

4-ij    Rad der Achse i, i = 1, 2, 3, 4, 5, mit j = 1 links und j = 2 rechts

6    Reifenoberfläche

7    Radachse

8    Reifenaufstandsfläche

10    Trägheitssensor-Einheit, IMU

11    Beschleunigungssensor

12    Gierraten-Sensor

20    Steuergerät des Fahrzeugs 1, insbesondere eines Fahrzeug-Regelsystems

25    Radbremse, insbesondere durch Steuergerät 20 angesteuert

Ai, A1 bis A5    Achsen des Fahrzeugs 1
A1    lenkbare Vorderachse
A5    Hinterachse

a-ref    Referenz-Radbeschleunigung
a-real    Radbeschleunigung
bi    Spurbreite

delta, δ     Lenkwinkel des Rades 4 gegenüber der Längsrichtung X' des Fahrzeugs 1,

delta-lim     Lenkwinkel-Grenzwert

Δ     Finite Differenz-Operator

DP     Projektions-Differenz der Projektionen des Längsschlupfes sl_x und des Querschlupfes sl_y auf eine Längsrichtung des Rades X'

mue-0, μ0     maximaler Reibungskoeffizient, maximaler Reibungsbeiwert

mue, μ     aktueller Reibungskoeffizient

n     Raddrehzahl

omega, ωz     Gierrate des Fahrzeugs 1, d.h. um die Gierachse Z

sl_x     Längsschlupf

sl_y     Querschlupf

XY     Straßen-Koordinatensystem, COG-Koordinatensystem

X'Y'     Fahrzeug-Koordinatensystem des Nutzfahrzeugs 1

X"Y"     Rad-Koordinatensystem eines Rades 4

SPB     Spurbreite einer Achse Ai des Fahrzeugs 1

SD     Sensorabstand

v     Fahrgeschwindigkeit des Fahrzeugs 1.

XYZ     Straßen-Koordinatensystem

X' Y' Z'     Fahrzeug-Koordinatensystem

X"Y"Z"     Rad-Koordinatensystem

**Patentansprüche**

1.   Verfahren zum Ermitteln eines maximalen Reibungskoeffizienten (mue_0) eines Rades (4) eines Fahrzeugs (1) auf einer Fahrbahn (2), wobei das Verfahren folgende Schritte aufweist:

- Ermitteln einer Referenz-Radbeschleunigung (a-ref) des Rades (4), wobei Beschleunigungen (a'x, a'y) und ein Gierverhalten (omega-z) des Fahrzeugs (1) und/oder des Rades (4) auf der Fahrbahn (2) ermittelt werden, (ST2)
- Ermitteln einer reellen Radbeschleunigung (a-real) des Rades (4), wobei ein Schlupf-Verhalten des Rades (4) auf der Fahrbahn (2) ermittelt wird (ST3)
- Vergleich der Referenz-Radbeschleunigung (a-ref) und der reellen Radbeschleunigung (a-real) (ST4),
- Ermitteln des maximalen Reibungskoeffizienten (mue_0) aus dem Vergleich der Referenz-Radbeschleunigung (a-ref) und der reellen Radbeschleunigung (a-real) (ST5), **dadurch gekennzeichnet, dass**
bei der Ermittlung der reellen Radbeschleunigung (a-real) ein um den maximalen Reibungskoeffizienten (mue_0) normierter Wert ermittelt wird (ST3),
und bei der Ermittlung der Referenz-Beschleunigung (a-ref) ein von dem maximalen Reibungskoeffizienten (mue_0) abhängiger Wert ermittelt wird (ST2),
sodass der maximale Reibungskoeffizient (mue_0) aus einem Quotienten der Referenz-Beschleunigung (a-ref) und der reellen Radbeschleunigung (a-real) ermittelt wird (ST4, ST5).

2.   Verfahren nach Anspruch 1, **dadurch gekennzeichnet, dass** eine Umrechnung der Radgeschwindigkeit (vijx, vijy) zwischen dem Rad-Koordinatensystem (X"Y") und dem Fahrbahn-Koordinatensystem (XY) mittels einer Rotationsmatrix (R(delta-ij)) erfolgt.

3.   Verfahren nach Anspruch 1 oder 2, **dadurch gekennzeichnet, dass** bei der Ermittlung der Referenz-Radbeschleunigung (a-ref) die Beschleunigungen (ax, ay) und/oder die Gierrate (omega) mittels Trägheitssensoren (11, 12) des Fahrzeugs (1), insbesondere einer Trägheitssensor-Einheit (10), ermittelt werden. (ST2)

4.   Verfahren nach Anspruch 3, **dadurch gekennzeichnet, dass** bei der Ermittlung der Referenz-Radbeschleunigung (a-ref) Abstände (SD) des Rades (4) von den Trägheitssensoren (11, 12) und/oder von einem Schwerpunkt (SP) des Fahrzeugs (1) berücksichtigt werden. (ST2)

5.   Verfahren nach Anspruch 4, **dadurch gekennzeichnet, dass** die Längsbeschleunigung (ax) und/oder die Quer-Beschleunigung (ay) des Rades (4) aus Messwerten gravitäts-kompensiert ermittelt werden, insbesondere unter Projektion auf die Fahrebene und/oder Berechnung und Subtraktion vertikaler Beschleunigungswerte (az).

6. Verfahren nach einem der vorherigen Ansprüche, **dadurch gekennzeichnet, dass** bei der Ermittlung der Referenz-Radbeschleunigung (a-ref) die Beschleunigungen (a'x, a'y) und das Gierverhalten des Fahrzeugs (1) in einer Fahrebene (X'Y') des Fahrzeugs (1) ohne Beschleunigungen oder Rotationen in der zur Fahrebene (X'Y') vertikalen Richtung (Z'), ermittelt werden.

7. Verfahren nach einem der vorherigen Ansprüche, **dadurch gekennzeichnet, dass** bei der Ermittlung der Referenz-Radbeschleunigung (a-ref) des Fahrzeugs (1) eine Längsbeschleunigung (a'x) und eine Quer-Beschleunigung (a'y) des Rades (4) in einem Fahrzeug-Koodinatensystem (X', Y') ermittelt werden (ST2).

8. Verfahren nach einem der vorherigen Ansprüche, **dadurch gekennzeichnet, dass** die Referenz-Radbeschleunigung (a-ref) ganz oder teilweise ermittelt wird aus Positionsmessungen des Fahrzeugs (1) in einem externen Positions-System, zum Beispiel einem globalen Positionssystem (GPS).

9. Verfahren nach einem der vorherigen Ansprüche, **dadurch gekennzeichnet, dass** bei der Ermittlung der reellen Radbeschleunigung (a-real) ein Längs-Schlupf (slx') und ein Quer-Schlupf (sly') des Rades (4) herangezogen oder ermittelt werden. (ST3)

10. Verfahren nach Anspruch 9, **dadurch gekennzeichnet, dass** der Quer-Schlupf (sly') ermittelt wird unter Verwendung einer oder mehrerer der folgenden Querschlupf-Eingangsgrößen:

    - eine Raddrehzahl (n) und/oder Radgeschwindigkeit, ein Lenkwinkel (delta) des Rades (4) gegenüber einer Längsrichtung (X') des Fahrzeugs (1), eine Gierrate (omega), und/oder einer Spurbreite (bi) einer Achse (Ai) des Fahrzeugs (1).

11. Verfahren nach einem der Ansprüche 9 oder 10, **dadurch gekennzeichnet, dass** der Längs-Schlupf (slx) anhand einer oder mehrerer der folgenden Längsschlupf-Eingangsgrößen ermittelt wird: eine Raddrehzahl (n) oder Radgeschwindigkeit des Rades (4), ein Lenkwinkel (delta) des Rades (4) gegenüber einer Längsrichtung (X') des Fahrzeugs (1), eine Gierrate (omega) des Fahrzeugs (1), eine Spurbreite (SPB) einer Achse (Ai) des Fahrzeugs (1), eine Fahrtrichtung (x) des Fahrzeugs (1) und eine Fahrgeschwindigkeit (v) des Fahrzeugs (1).

12. Verfahren nach Anspruch 10 oder 11, **dadurch gekennzeichnet, dass** einige oder alle der folgenden Längsschlupf-Eingangsgrößen und Querschlupf-Eingangsgrößen gemessen und als aktuelle Messwerte herangezogen werden: die Raddrehzahl (n), der Lenkwinkel (delta, $\Delta$), die Gierrate (omega, $\omega$), die Fahrgeschwindigkeit (v).

13. Verfahren nach einem der vorherigen Ansprüche, **dadurch gekennzeichnet, dass** die Referenz-Radbeschleunigung (a-ref) und die reelle Radbeschleunigung (a-real) auf ein gleiches Koordinatensystem bezogen und ineinander überführt werden, wobei insbesondere die reelle Radbeschleunigung (a-real) zunächst in einem fahrzeugbezogenen Koordinatensystem (X', Y') ermittelt wird und
die Referenz-Radbeschleunigung (a-ref) in einem radbezogenen Koordinatensystem (X", Y") ermittelt wird, unter nachfolgender Anpassung.

14. Verfahren nach einem der vorherigen Ansprüche, **dadurch gekennzeichnet, dass** maximale Reibungskoeffizienten (mue_0) für mehrere Räder (4, 4-ij), insbesondere sämtliche Räder (4, 4-ij) des Fahrzeugs (1), ermittelt werden, insbesondere separat voneinander ermittelt werden.

15. Verfahren nach einem der vorherigen Ansprüche, **dadurch gekennzeichnet, dass** das Fahrzeug (1) zwei oder mehr, insbesondere zwei bis fünf Achsen (A1-A5) aufweist und die maximalen Reibungskoeffizienten (mue_0, $\mu_0$) für einige oder sämtliche Räder (4) von nicht liftbaren Achsen (A1-A5) ermittelt werden.

16. Verfahren nach einem der vorherigen Ansprüche, **dadurch gekennzeichnet, dass** bei einem geringen Lenkwinkel (delta) unterhalb eines Lenkwinkel-Grenzwertes (delta-lim), insbesondere bei nicht gelenkten Achsen (A2 bis A5) oder bei einer gelenkten Achse (A1) bei einer Geradeausfahrt (vy=0),
ein Längsschlupf (sl_ijx) und ein Querschlupf (sl_ijy) berechnet werden über eine Projektions-Differenz (DP) der Projektionen des Längsschlupfes (sl_x) und des Querschlupfes (sl_y) auf eine Längsrichtung des Rades ( X", Y"=0).

**17.** Verfahren nach einem der vorherigen Ansprüche, **dadurch gekennzeichnet, dass** als Schlupf-Verhalten des Rades, bzw. als kombinierter Radschlupf der Räder der Vorderachse (VL) die folgende Gleichung herangezogen wird:

$$\mathrm{sl}_{1_{jx}} - \mathrm{sl}_{1_{jy}} \tan\delta_{1_j} = \frac{V_{1_j}\sigma - \left(\left(V_x\sigma - C_{1_y}\omega_z\right)\sec\delta_{1_j}\right)}{\max\left(\left|V_{1_j}\right|, \left|\left(V_x\sigma - C_{1_y}\omega_z\right)\sec\delta_{1_j} + V_{1_{jy}}\tan\delta_{1_j}\right|\right)}$$

mit slijx Schlupf des Rades 4-ij in x-Richtung, Längsschlupf slijy Schlupf des Rades 4-ij in y-Richtung. Querschlupf $\delta$_ij Lenkwinkel des Rades 4-ij vx Fahrgeschwindigkeit in x-Richtung (Längsrichtung) vij Rad-Geschwindigkeit des Rades 4-ij $\sigma$ Fahrtrichtung des Fahrzeugs (1), mit $\sigma$=1 für die Vorwährtsfahrt, $\sigma$=0 für Stillstand und $\sigma$=-1 für Rückwärtsfahrt $\omega_z$ Gierrate, d.h. Drehrate um vertikale Achse z C1y Reifenkonstante in Abhängigkeit der geometrischen Position

**18.** Fahrzeug-Regelverfahren, bei dem mindestens ein maximaler Reibungskoeffizient (mue_0) mit einem Verfahren nach einem der vorherigen Ansprüche ermittelt und auf Grundlage des mindestens einen ermittelten maximalen Reibungskoeffizienten (mue_0, mue_0ij) ein Fahrverhalten des Fahrzeuges (1) gesteuert oder geregelt wird, insbesondere unter Ansteuerung von Fahrzeugbremsen (25) und/oder eines Antriebs des Fahrzeugs (1).

**19.** Fahrzeug-Regelverfahren nach Anspruch 18, wobei ein Fahrzeug- Regelsystem zur Durchführung des Fahrzeug-Regelverfahrens ausgewählt ist aus der Gruppe: Antiblockier-Regelsystem (ABS), Antriebsschlupf-Regelsystem, Elektronisches Bremssystem (EBS), Fahrdynamik-Regelsystem, Fahrerassistenzsystem, Fahrer-Komfortsystem, Abstandshaltesystem, Automatic-Cruise-Control ACC, Elektronisches Stabilitätssystem ESP.

**20.** Fahrzeug-Regelverfahren nach Anspruch 18 oder 19, wobei zusätzlich ein aktueller Reibungs-Koeffizient (mue) für einzelne oder alle Räder (4) ermittelt und herangezogen wird.

**21.** Steuergerät (20) für ein Fahrzeug-Regelsystem eines Fahrzeugs (1), wobei das Steuergerät (20) ausgebildet ist, ein Verfahren nach einem der Ansprüche 1 bis 17 und/oder ein Fahrzeug-Regelverfahren nach einem der Ansprüche 18 bis 20 durchzuführen.

**22.** Fahrzeug (1), insbesondere Nutzfahrzeug, das ein Steuergerät (20) nach Anspruch 21, zwei oder mehr, insbesondere zwei bis fünf nicht-liftbare Achsen (A1, A2, A3, A4, A5) und eine Trägheitssensor-Einheit (10) aufweist.

**Claims**

**1.** Method for ascertaining a maximum friction coefficient (mue_0) of a wheel (4) of a vehicle (1) on a roadway (2), wherein the method has the following steps:

- ascertaining a reference wheel acceleration (a-ref) of the wheel (4), wherein accelerations (a'x, a'y) and a yaw behavior (omega-z) of the vehicle (1) and/or of the wheel (4) on the roadway (2) are ascertained, (ST2)
- ascertaining a real wheel acceleration (a-real) of the wheel (4), wherein a slip behavior of the wheel (4) on the roadway (2) is ascertained (ST3)
- comparing the reference wheel acceleration (a-ref) and the real wheel acceleration (a-real) (ST4),
- ascertaining the maximum friction coefficient (mue_0) from the comparison of the reference wheel acceleration (a-ref) and the real wheel acceleration (a-real) (ST5), **characterized in that**

when ascertaining the real wheel acceleration (a-real), a value normalized by the maximum friction coefficient (mue_0) is ascertained (ST3),
and when ascertaining the reference acceleration (a-ref), a value dependent on the maximum friction coefficient (mue_0) is ascertained (ST2),
with the result that the maximum friction coefficient (mue_0) is ascertained (ST4, ST5) from a quotient of the reference acceleration (a-ref) and the real wheel acceleration (a-real).

**2.** Method according to claim 1, **characterized in that** the wheel speed (vijx, vijy) is converted between the wheel coordinate system (X"Y") and the roadway coordinate system (XY) by means of a rotation matrix (R(delta-ij)).

3. Method according to claim 1 or 2, **characterized in that** when ascertaining the reference wheel acceleration (a-ref), the accelerations (ax, ay) and/or the yaw rate (omega) are ascertained by means of inertial sensors (11, 12) of the vehicle (1), in particular by means of an inertial sensor unit (10). (ST2)

4. Method according to claim 3, **characterized in that** when ascertaining the reference wheel acceleration (a-ref), distances (SD) of the wheel (4) from the inertial sensors (11, 12) and/or from a center (CG) of gravity of the vehicle (1) are taken into account. (ST2)

5. Method according to claim 4, **characterized in that** the longitudinal acceleration (ax) and/or the lateral acceleration (ay) of the wheel (4) are ascertained in a gravity-compensated manner from measured values, in particular by projection onto the driving plane and/or calculating and subtracting vertical acceleration values (az).

6. Method according to any of the preceding claims, **characterized in that** when ascertaining the reference wheel acceleration (a-ref), the accelerations (a'x, a'y) and the yaw behavior of the vehicle (1) in a driving plane (X'Y') of the vehicle (1) are ascertained without accelerations or rotations in the direction (Z') vertical with respect to the driving plane (X'Y').

7. Method according to any of the preceding claims, **characterized in that** when ascertaining the reference wheel acceleration (a-ref) of the vehicle (1), a longitudinal acceleration (a'x) and a lateral acceleration (a'y) of the wheel (4) are ascertained (ST2) in a vehicle coordinate system (X', Y').

8. Method according to any of the preceding claims, **characterized in that** the reference wheel acceleration (a-ref) is ascertained wholly or partially from position measurements of the vehicle (1) in an external positioning system, for example a global positioning system (GPS).

9. Method according to any of the preceding claims, **characterized in that** when ascertaining the real wheel acceleration (a-real), a longitudinal slip (slx') and a lateral slip (sly') of the wheel (4) are used or ascertained. (ST3)

10. Method according to claim 9, **characterized in that** the lateral slip (sly') is ascertained using one or more of the following lateral slip input variables:

    - a wheel rotational speed (n) and/or wheel speed, a steering angle (delta) of the wheel (4) relative to a longitudinal direction (X') of the vehicle (1), a yaw rate (omega), and/or a track width (bi) of an axle (Ai) of the vehicle (1).

11. Method according to either of claims 9 or 10, **characterized in that** the longitudinal slip (slx) is ascertained on the basis of one or more of the following longitudinal slip input variables:
    a wheel rotational speed (n) or wheel speed of the wheel (4), a steering angle (delta) of the wheel (4) relative to a longitudinal direction (X') of the vehicle (1), a yaw rate (omega) of the vehicle (1), a track width (SPB) of an axle (Ai) of the vehicle (1), a driving direction (x) of the vehicle (1), and a driving speed (v) of the vehicle (1).

12. Method according to claim 10 or 11, **characterized in that** some or all of the following longitudinal slip input variables and lateral slip input variables are measured and are used as current measured values:
    the wheel rotational speed (n), the steering angle (delta, $\Delta$), the yaw rate (omega, $\omega$), and the vehicle speed (v).

13. Method according to any of the preceding claims, **characterized in that** the reference wheel acceleration (a-ref) and the real wheel acceleration (a-real) are related to the same coordinate system and converted into each other, wherein in particular the real wheel acceleration (a-real) is first ascertained in a vehicle-related coordinate system (X', Y') and the reference wheel acceleration (a-ref) is ascertained in a wheel-related coordinate system (X", Y"), with subsequent adjustment.

14. Method according to any of the preceding claims, **characterized in that** maximum friction coefficients (mue_0) for a plurality of wheels (4, 4-ij), in particular all wheels (4, 4-ij) of the vehicle (1), are ascertained, in particular separately from each other.

15. Method according to any of the preceding claims, **characterized in that** the vehicle (1) has two or more, in particular two to five axles (A1-A5) and the maximum friction coefficients (mue_0, $\mu_0$) are ascertained for some or all wheels (4) of non-liftable axles (A1-A5).

16. Method according to any of the preceding claims, **characterized in that** at a small steering angle (delta) below a steering angle limit value (delta-lim), in particular for non-steered axles (A2 to A5) or for a steered axle (A1) when driving straight ahead (vy=0),
a longitudinal slip (sl_ijx) and a lateral slip (sl_ijy) are calculated via a projection difference (DP) between the projections of the longitudinal slip (sl_x) and of the lateral slip (sl_y) onto a longitudinal direction of the wheel (X", Y"=0).

17. Method according to any of the preceding claims, **characterized in that** the following equation is used as the slip behavior of the wheel, or as the combined wheel slip of the wheels of the front axle (VL):

$$sl_{1_{jx}} - sl_{1_{jy}} \tan \delta_{1_j} = \frac{V_{1_j}\sigma - \left(\left(V_x\sigma - C_{1_y}\omega_z\right)\sec\delta_{1_j}\right)}{\max\left(\left|V_{1_j}\right|, \left|\left(V_x\sigma - C_{1_y}\omega_z\right)\sec\delta_{1_j} + V_{1_{jy}}\tan\delta_{1_j}\right|\right)}$$

where

slijx is the slip of the wheel 4-ij in the x-direction, longitudinal slip
slijy is the slip of the wheel 4-ij in the y-direction. lateral slip
$\delta$_ij is the steering angle of the wheel 4-ij
vx is the driving speed in the x-direction (longitudinal direction)
vij is the wheel speed of the wheel 4-ij
$\sigma$ is the driving direction of the vehicle (1), where $\sigma$=1 for forward travel, $\sigma$=0 for standstill, and $\sigma$=-1 for reverse travel
$\omega_z$ is the yaw rate, i.e., the rotation rate about the vertical axis z
C1y is the tire constant as a function of the geometric position

18. Method for the closed-loop control of a vehicle, in which method at least one maximum friction coefficient (mue_0) is ascertained using a method according to any of the preceding claims and, on the basis of the at least one ascertained maximum friction coefficient (mue_0, mue_0ij), a driving behavior of the vehicle (1) is controlled in an open or closed loop, in particular by actuating vehicle brakes (25) and/or a drive of the vehicle (1).

19. Vehicle closed-loop control method according to claim 18, wherein a vehicle closed-loop control system for performing the vehicle closed-loop control method is selected from the group of: an anti-lock braking system (ABS), a traction control system, an electronic braking system (EBS), a vehicle dynamics control system, a driver assistance system, a driver comfort system, a distance control system, automatic cruise control ACC, and an electronic stability program ESP.

20. Vehicle closed-loop control method according to claim 18 or 19, wherein a current friction coefficient (mue) for individual or all wheels (4) is additionally ascertained and used.

21. Control unit (20) for a vehicle closed-loop control system of a vehicle (1), wherein the control unit (20) is designed to perform a method according to any of claims 1 to 17 and/or a vehicle closed-loop control method according to any of claims 18 to 20.

22. Vehicle (1), in particular a commercial vehicle, having a control unit (20) according to claim 21, two or more, in particular two to five non-liftable axles (A1, A2, A3, A4, A5), and an inertial sensor unit (10).

**Revendications**

1. Procédé permettant de déterminer un coefficient de friction maximal (mue_0) d'une roue (4) d'un véhicule (1) sur une chaussée (2), dans lequel le procédé présente les étapes suivantes :

- détermination d'une accélération de roue de référence (a-ref) de la roue (4), dans lequel des accélérations (a'x, a'y) et un comportement en lacet (omega-z) du véhicule (1) et/ou de la roue (4) sur la chaussée (2) sont déterminés, (ST2)

- détermination d'une accélération de roue réelle (a-real) de la roue (4), dans lequel un comportement de patinage de la roue (4) sur la chaussée (2) est déterminé (ST3)
- comparaison de l'accélération de roue de référence (a-ref) et de l'accélération de roue réelle (a-real) (ST4),
- détermination du coefficient de friction maximal (mue_0) à partir de la comparaison de l'accélération de roue de référence (a-ref) et de l'accélération de roue réelle (a-real) (ST5), **caractérisé en ce que**

lors de la détermination de l'accélération de roue réelle (a-real), une valeur normalisée par le coefficient de friction maximal (mue_0) est déterminée (ST3),
et, lors de la détermination de l'accélération de référence (a-ref), une valeur dépendant du coefficient de friction maximal (mue_0) est déterminée (ST2),
de sorte que le coefficient de friction maximal (mue_0) est déterminé à partir d'un quotient de l'accélération de référence (a-ref) et de l'accélération de roue réelle (a-real) (ST4, ST5).

2. Procédé selon la revendication 1, **caractérisé en ce qu'**une conversion de la vitesse de roue (vijx, vijy) entre le système de coordonnées de roue (X"Y") et le système de coordonnées de chaussée (XY) est effectuée au moyen d'une matrice de rotation (R(delta-ij)).

3. Procédé selon la revendication 1 ou 2, **caractérisé en ce que,** lors de la détermination de l'accélération de roue de référence (a-ref), les accélérations (ax, ay) et/ou le taux de lacet (omega) sont déterminés au moyen de capteurs inertiels (11, 12) du véhicule (1), en particulier d'une unité de capteur inertiel (10). (ST2)

4. Procédé selon la revendication 3, **caractérisé en ce que,** lors de la détermination de l'accélération de roue de référence (a-ref), des distances (SD) de la roue (4) par rapport aux capteurs inertiels (11, 12) et/ou par rapport à un centre de gravité (SP) du véhicule (1) sont prises en compte. (ST2)

5. Procédé selon la revendication 4, **caractérisé en ce que** l'accélération longitudinale (ax) et/ou l'accélération transversale (ay) de la roue (4) sont déterminées à partir de valeurs de mesure compensées en gravité, en particulier par projection sur le plan de conduite et/ou par calcul et soustraction de valeurs d'accélération verticales (az).

6. Procédé selon l'une des revendications précédentes, **caractérisé en ce que,** lors de la détermination de l'accélération de roue de référence (a-ref), les accélérations (a'x, a'y) et le comportement en lacet du véhicule (1) sont déterminés dans un plan de conduite (X'Y') du véhicule (1) sans accélérations ou rotations dans la direction (Z') verticale au plan de conduite (X'Y').

7. Procédé selon l'une des revendications précédentes, **caractérisé en ce que,** lors de la détermination de l'accélération de roue de référence (a-ref) du véhicule (1), une accélération longitudinale (a'x) et une accélération transversale (a'y) de la roue (4) sont déterminées (ST2) dans un système de coordonnées de véhicule (X', Y').

8. Procédé selon l'une des revendications précédentes, **caractérisé en ce que** l'accélération de roue de référence (a-ref) est déterminée entièrement ou en partie à partir de mesures de position du véhicule (1) dans un système de positionnement externe, par exemple un système mondial de positionnement (GPS).

9. Procédé selon l'une des revendications précédentes, **caractérisé en ce que,** lors de la détermination de l'accélération de roue réelle (a-real), un patinage longitudinal (slx') et un patinage transversal (sly') de la roue (4) sont utilisés ou déterminés. (ST3)

10. Procédé selon la revendication 9, **caractérisé en ce que** le patinage transversal (sly') est déterminé à l'aide d'une ou plusieurs des grandeurs d'entrée de patinage transversal suivantes :

- une vitesse de rotation de roue (n) et/ou une vitesse de roue, un angle de braquage (delta) de la roue (4) par rapport à une direction longitudinale (X') du véhicule (1), un taux de lacet (omega), et/ou une largeur de voie (bi) d'un essieu (Ai) du véhicule (1).

**11.** Procédé selon l'une des revendications 9 ou 10, **caractérisé en ce que** le patinage longitudinal (slx) est déterminé à l'aide d'une ou plusieurs des grandeurs d'entrée de patinage longitudinal suivantes :
une vitesse de rotation de roue (n) ou une vitesse de roue de la roue (4), un angle de braquage (delta) de la roue (4) par rapport à une direction longitudinale (X') du véhicule (1), un taux de lacet (omega) du véhicule (1), une largeur de voie (SPB) d'un essieu (Ai) du véhicule (1), une direction de conduite (x) du véhicule (1) et une vitesse de conduite (v) du véhicule (1).

**12.** Procédé selon la revendication 10 ou 11, **caractérisé en ce que** tout ou partie des grandeurs d'entrée de patinage longitudinal et grandeurs d'entrée de patinage transversal suivantes sont mesurées et utilisées comme valeurs de mesure actuelles :
la vitesse de rotation de roue (n), l'angle de braquage (delta, $\Delta$), le taux de lacet (omega, $\omega$), la vitesse de conduite (v).

**13.** Procédé selon l'une des revendications précédentes, **caractérisé en ce que** l'accélération de roue de référence (a-ref) et l'accélération de roue réelle (a-real) sont rapportées à un même système de coordonnées et sont converties l'une en l'autre, dans lequel en particulier l'accélération de roue réelle (a-real) est d'abord déterminée dans un système de coordonnées (X', Y') relatif au véhicule, et
l'accélération de roue de référence (a-ref) est déterminée dans un système de coordonnées (X", Y") relatif à la roue, avec adaptation ultérieure.

**14.** Procédé selon l'une des revendications précédentes,
**caractérisé en ce que** des coefficients de friction maximaux (mue_0) sont déterminés, en particulier sont déterminés séparément les uns des autres, pour plusieurs roues (4, 4-ij), en particulier toutes les roues (4, 4-ij) du véhicule (1).

**15.** Procédé selon l'une des revendications précédentes, **caractérisé en ce que**
le véhicule (1) présente deux essieux (A1-A5) ou plus, en particulier deux à cinq essieux, et les coefficients de friction maximaux (mue_0, $\mu_0$) sont déterminés pour certaines ou toutes les roues (4) d'essieux (A1-A5) non relevables.

**16.** Procédé selon l'une des revendications précédentes, **caractérisé en ce que,** lorsque l'angle de braquage (delta) est faible et inférieur à une valeur limite d'angle de braquage (delta-lim), en particulier pour des essieux non directeurs (A2 à A5) ou pour un essieu directeur (A1), lors d'un déplacement en ligne droite (vy = 0),
un patinage longitudinal (sl_ijx) et un patinage transversal (sl_ijy) sont calculés par l'intermédiaire d'une différence de projection (DP) des projections du patinage longitudinal (sl_x) et du patinage transversal (sl_y) sur une direction longitudinale de la roue (X", Y" = 0).

**17.** Procédé selon l'une des revendications précédentes, **caractérisé en ce que** l'équation suivante est utilisée comme comportement de patinage de la roue, ou comme patinage de roue combiné des roues de l'essieu avant (VL) :

$$\mathrm{sl}_{1_{jx}} - \mathrm{sl}_{1_{jy}} \tan \delta_{1_j} = \frac{V_{1_j}\sigma - \left(\left(V_x\sigma - C_{1_y}\omega_z\right)\sec \delta_{1_j}\right)}{\max\left(\left|V_{1_j}\right|, \left|\left(V_x\sigma - C_{1_y}\omega_z\right)\sec \delta_{1_j} + V_{1_{jy}}\tan \delta_{1_j}\right|\right)}$$

où

slijx patinage de la roue 4-ij dans la direction x, patinage longitudinal
slijy patinage de la roue 4-ij dans la direction y, patinage transversal
$\delta$_ij angle de braquage de la roue 4-ij
vx vitesse de conduite dans la direction x (direction longitudinale)
vij vitesse de roue de la roue 4-ij
$\sigma$ direction de conduite du véhicule (1), où $\sigma$ = 1 pour la marche avant, $\sigma$ = 0 pour l'arrêt et $\sigma$ = -1 pour la marche arrière
$\omega_z$ taux de lacet, c'est-à-dire taux de rotation autour de l'axe vertical z
C1y constante de pneu en fonction de la position géométrique

**18.** Procédé de régulation de véhicule, dans lequel au moins un coefficient de friction maximal (mue_0) est déterminé par un procédé selon l'une des revendications précédentes et un comportement de conduite du véhicule (1) est commandé ou régulé sur la base de l'au moins un coefficient de friction maximal (mue_0, mue_0ij) déterminé, en particulier en commandant des freins de véhicule (25) et/ou un entraînement du véhicule (1).

19. Procédé de régulation de véhicule selon la revendication 18, dans lequel un système de régulation de véhicule pour la mise en œuvre du procédé de régulation de véhicule est choisi dans le groupe : système de régulation d'antiblocage (ABS), système de régulation de patinage à l'accélération, système de freinage électronique (EBS), système de régulation de dynamique de conduite, système d'aide à la conduite, système de confort du conducteur, système de maintien de distance, régulateur de vitesse et d'espacement ACC, électro-stabilisateur programmé ESP.

20. Procédé de régulation de véhicule selon la revendication 18 ou 19, dans lequel un coefficient de friction actuel (mue) est en outre déterminé et utilisé pour une ou toutes les roues (4).

21. Appareil de commande (20) pour un système de régulation de véhicule d'un véhicule (1), dans lequel l'appareil de commande (20) est configuré pour mettre en œuvre un procédé selon l'une des revendications 1 à 17 et/ou un procédé de régulation de véhicule selon l'une des revendications 18 à 20.

22. Véhicule (1), en particulier véhicule utilitaire, qui présente un appareil de commande (20) selon la revendication 21, deux ou plus, en particulier deux à cinq, essieux non relevables (A1, A2, A3, A4, A5) et une unité de capteur inertiel (10).

**Fig. 1**

**Fig. 6**

**Fig. 2**

**Fig. 3**

**Fig. 4**

**Fig. 5**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102016211728 A1
- DE 102020111520 B3
- DE 19963135 A1